(19) Europäisches Patentamt
European Patent Office
Office européen des brevets

(11) **EP 4 365 683 A1**

(12) **DEMANDE DE BREVET EUROPEEN**

(43) Date de publication:
**08.05.2024 Bulletin 2024/19**

(21) Numéro de dépôt: **23207459.1**

(22) Date de dépôt: **02.11.2023**

(51) Classification Internationale des Brevets (IPC):
**G03H 1/08** *(2006.01)*   **G06N 3/02** *(2006.01)*
**G06N 3/0464** *(2023.01)*   **G06T 7/55** *(2017.01)*
**G06N 3/08** *(2023.01)*   *G06V 10/44* *(2022.01)*
*G06V 10/77* *(2022.01)*   *G06V 20/64* *(2022.01)*

(52) Classification Coopérative des Brevets (CPC):
**G03H 1/0808; G03H 1/0866; G06N 3/0464;**
**G06N 3/08; G06T 7/55; G06V 10/454;**
**G06V 10/7715; G06V 20/647;** G03H 2001/0883;
G03H 2210/454

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **03.11.2022 FR 2211433**

(71) Demandeur: **Fondation B-COM
35510 Cesson-Sévigné (FR)**

(72) Inventeurs:
• **MADALI, Nabil
35700 RENNES (FR)**
• **GILLES, Antonin
35700 RENNES (FR)**
• **GIOIA, Patrick
35530 SERVON-SUR-VILAINE (FR)**
• **MORIN, Luce
35700 RENNES (FR)**

(74) Mandataire: **Jacobacci Coralis Harle
32, rue de l'Arcade
75008 Paris (FR)**

(54) **PROCÉDÉ ET DISPOSITIF D'ESTIMATION D'UNE CARTE DE PROFONDEUR ASSOCIÉE À UN HOLOGRAMME NUMÉRIQUE REPRÉSENTANT UNE SCÈNE ET PROGRAMME D'ORDINATEUR ASSOCIÉ**

(57)    La présente invention concerne un procédé d'estimation d'une carte de profondeur (C) associée à un hologramme représentant une scène, le procédé comprenant des étapes de :
- reconstruction (E4) d'images ($I_i$) de la scène, chaque image étant associée à une profondeur ($z_i$),
- décomposition (E6) de chaque image en une pluralité d'imagettes ($J_{i;j,k}$) adjacentes les unes aux autres, chaque imagette étant associée à ladite profondeur et comprenant une pluralité de pixels,
- détermination (E8), pour chaque imagette, d'une carte de focalisation ($C_{i;j,k}$) par fourniture, en entrée d'un réseau de neurones, des valeurs associées auxdits pixels de l'imagette, pour obtenir, en sortie dudit réseau, ladite carte de focalisation comprenant un niveau de focalisation associé au pixel concerné, et
- détermination (E10) d'une valeur de profondeur, pour chaque point d'une carte de profondeur (C), en fonction des niveaux de focalisation obtenus.
    L'invention concerne également un dispositif d'estimation et un programme d'ordinateur associé.

**Fig.4**

**Description**

Domaine technique de l'invention

La présente invention concerne le domaine technique de l'holographie numérique.
Elle concerne en particulier un procédé et dispositif d'estimation d'une carte de profondeur associée à un hologramme numérique représentant une scène. Elle concerne également un programme d'ordinateur associé.

Etat de la technique

L'holographie numérique est une technologie immersive qui enregistre les caractéristiques d'une onde diffractée par un objet présent dans une scène tridimensionnelle de manière à reproduire une image tridimensionnelle de cet objet. L'hologramme numérique obtenu contient alors toutes les informations permettant de décrire cette scène tridimensionnelle.
Cependant, l'extraction de ces informations depuis l'hologramme numérique lui-même afin de reconstruire la scène tridimensionnelle n'est pas simple car le plan de l'hologramme numérique ne comprend pas la localisation spatiale des objets dans la scène tridimensionnelle.
Il est notamment connu d'utiliser des méthodes de détermination de profondeur (ou « *Depth from focus* » selon l'appellation d'origine anglosaxonne) par rapport au plan de l'hologramme pour déterminer, à partir de l'hologramme, les informations concernant la géométrie de la scène. Un exemple d'une telle méthode est par exemple décrit dans l'article « Depth from focus », de Grossmann, Pavel, Pattern Recognit. Lett. 5, 63-69, 1987.
Dans de telles méthodes, un volume de reconstruction est obtenu à partir de plusieurs plans de reconstruction holographique calculés à différentes distances de mise au point choisies dans un intervalle prédéfini. A partir de ces plans de reconstruction, la profondeur associée est estimée en appliquant, sur chacun de ces plans, des opérateurs de focalisation afin de sélectionner, pour chaque pixel, la profondeur du plan de reconstruction pour laquelle la mise au point est optimale.
Cependant, de telles méthodes sont longues à mettre en oeuvre et très coûteuses en ressources de calcul.

Présentation de l'invention

Dans ce contexte, la présente invention propose d'améliorer la détermination des valeurs de profondeur par rapport au plan d'un hologramme numérique associé à une scène tridimensionnelle.
Plus particulièrement, on propose selon l'invention un procédé d'estimation d'une carte de profondeur associée à un hologramme numérique représentant une scène, le procédé comprenant des étapes de :

- reconstruction d'une pluralité d'images de la scène à partir de l'hologramme numérique, chaque image reconstruite étant associée à une profondeur de la scène,
- décomposition de chaque image reconstruite en une pluralité d'imagettes, lesdites imagettes de ladite pluralité étant adjacentes les unes aux autres, chaque imagette étant associée à la profondeur de la scène correspondant à l'image reconstruite concernée, chaque imagette comprenant une pluralité de pixels,
- détermination, pour chaque imagette, d'une carte de focalisation par fourniture, en entrée d'un réseau de neurones artificiels, des valeurs associées auxdits pixels de l'imagette concernée, de manière à obtenir, en sortie du réseau de neurones artificiels, ladite carte de focalisation comprenant un niveau de focalisation associé au pixel concerné, et
- détermination d'une valeur de profondeur, pour chaque point d'une carte de profondeur, en fonction des niveaux de focalisation obtenus respectivement pour les pixels associés audit point de la carte de profondeur dans les cartes de focalisation respectivement déterminées pour les imagettes contenant un pixel correspondant audit point de la carte de profondeur.

Ainsi, les différentes imagettes traitées sont indépendantes les unes des autres car formées d'ensembles de pixels disjoints. Cette indépendance permet alors une mise en oeuvre plus rapide du procédé. De plus, les ressources en calcul nécessaires sont moins coûteuses grâce au nombre limité de zones à analyser (à savoir les différentes imagettes).
Par ailleurs, l'utilisation du réseau de neurones artificiels permet un traitement plus rapide de l'ensemble des imagettes et une détermination plus précise des niveaux de focalisation associés aux pixels des imagettes.
D'autres caractéristiques non limitatives et avantageuses du procédé conforme à l'invention, prises individuellement ou selon toutes les combinaisons techniquement possibles, sont les suivantes :

- pour chaque point de la carte de profondeur, la valeur de profondeur associée est obtenue par détermination de la profondeur correspondant au niveau de focalisation le plus élevé parmi tous les pixels associés audit point de la carte de profondeur dans les imagettes contenant lesdits pixels ;
- le réseau de neurones artificiels est un réseau de neurones à convolution ; et
- l'étape de reconstruction est mise en oeuvre de telle sorte que les images reconstruites sont respectivement associées à des profondeurs uniformément réparties entre une profondeur minimale et une profondeur maximale de la scène.

La présente invention concerne également un dispositif d'estimation d'une carte de profondeur associée à un hologramme numérique représentant une scène, le dispositif comprenant :

- un module de reconstruction d'une pluralité d'images de la scène à partir de l'hologramme numérique, chaque image reconstruite étant associée à une profondeur de la scène,
- un module de décomposition de chaque image reconstruite en une pluralité d'imagettes, lesdites imagettes de ladite pluralité étant adjacentes les unes aux autres, chaque imagette étant associée à la profondeur de la scène correspondant à l'image reconstruite concernée, chaque imagette comprenant une pluralité de pixels,
- un module de détermination, pour chaque imagette, d'une carte de focalisation par fourniture, en entrée d'un réseau de neurones artificiels, des valeurs associées auxdits pixels de l'imagette concernée, de manière à obtenir, en sortie du réseau de neurones artificiels, ladite carte de focalisation comprenant un niveau de focalisation associé au pixel concerné, et
- un module de détermination d'une valeur de profondeur, pour chaque point d'une carte de profondeur en fonction des niveaux de focalisation obtenus respectivement pour les pixels associés audit point de la carte de profondeur dans les imagettes contenant lesdits pixels.

La présente invention concerne enfin un programme d'ordinateur comprenant des instructions exécutables par un processeur et conçues pour mettre en oeuvre un procédé tel qu'introduit précédemment lorsque ces instructions sont exécutées par le processeur
Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Description détaillée de l'invention

De plus, diverses autres caractéristiques de l'invention ressortent de la description annexée effectuée en référence aux dessins qui illustrent des formes, non limitatives, de réalisation de l'invention et où :

la figure 1 représente, sous forme fonctionnelle, un dispositif d'estimation d'une carte de profondeur conçu pour mettre en oeuvre un procédé d'estimation d'une carte de profondeur conforme à l'invention,
la figure 2 représente un exemple d'un hologramme numérique associé à la carte de profondeur estimée selon l'invention,
la figure 3 est une représentation schématique d'un exemple d'architecture d'un réseau de neurones artificiels mis en oeuvre lors du procédé d'estimation d'une carte de profondeur conforme à l'invention, et
la figure 4 représente, sous forme de logigramme, un exemple de procédé d'estimation d'une carte de profondeur conforme à l'invention.

Il est à noter que, sur ces figures, les éléments structurels et/ou fonctionnels communs aux différentes variantes peuvent présenter les mêmes références.

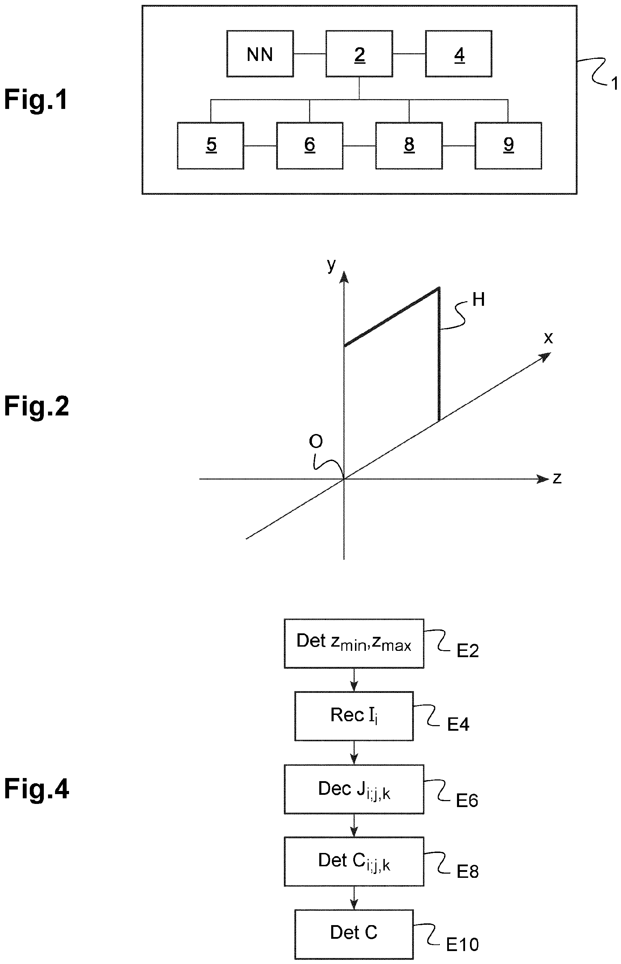

La figure 1 représente, sous forme fonctionnelle, un dispositif 1 d'estimation (également noté dispositif 1 dans la suite) d'une carte de profondeur C à partir d'un hologramme numérique H.
L'hologramme numérique H représente une scène tridimensionnelle donnée. Cette scène tridimensionnelle comprend par exemple un ou plusieurs objets. La scène tridimensionnelle est définie dans un repère (O, x, y, z).
Comme le montre la figure 2, l'hologramme numérique H est défini par une matrice de pixels dans le plan (x, y). L'axe z, dit axe des profondeurs z, est orthogonal au plan (x, y) de l'hologramme numérique H. Comme cela est visible sur la figure 2, l'hologramme numérique H est ici défini dans le plan d'équation z=0.
L'hologramme numérique H présente par exemple ici une taille de 1024x1024 pixels.
Le dispositif 1 d'estimation d'une carte de profondeur C est conçu pour estimer la carte de profondeur C associée à l'hologramme numérique H. Pour cela, le dispositif 1 comprend un processeur 2 et un dispositif de mémorisation 4. Le dispositif de mémorisation 4 est par exemple un disque dur ou une mémoire.
Le dispositif 1 comprend également un ensemble de modules fonctionnels. Il comprend par exemple un module de reconstruction 5, un module de décomposition 6, un module 8 de détermination d'une carte de focalisation $C_{i;j,k}$ et un module 9 de détermination d'une valeur de profondeur $d_{js+q,ks+r}$.

Chacun des différents modules décrits est par exemple réalisé au moyen d'instructions de programme d'ordinateur conçues pour mettre en oeuvre le module concerné lorsque ces instructions sont exécutées par le processeur 2 du dispositif 1 d'estimation de la carte de profondeur C.

Toutefois, en variante, un au moins des modules précités peut être réalisé au moyen d'un circuit électronique dédié, par exemple un circuit intégré à application spécifique.

Le processeur 2 est également conçu pour mettre en oeuvre un réseau de neurones artificiels NN, intervenant dans le procédé d'estimation de la carte de profondeur C associée à l'hologramme numérique H.

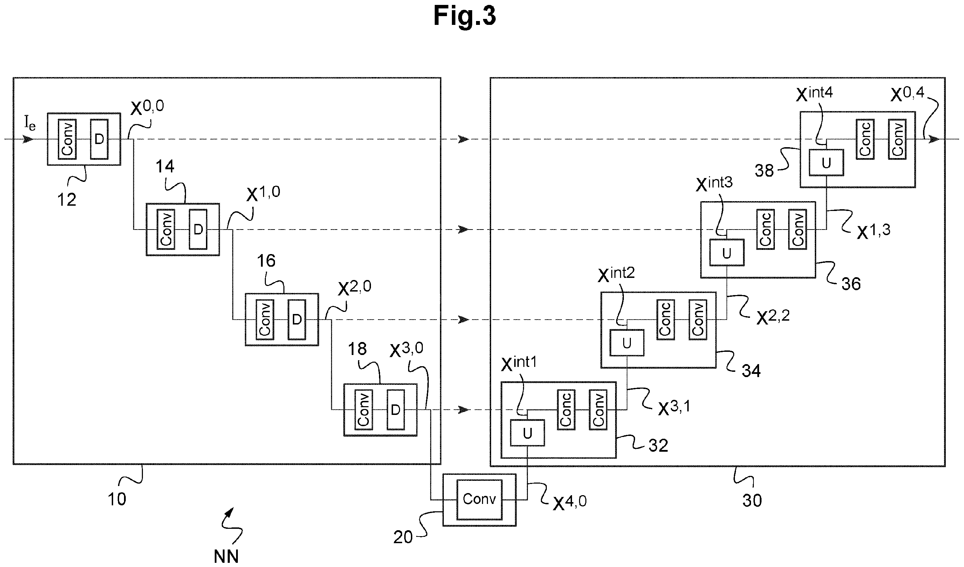

Un exemple d'architecture de ce réseau de neurones artificiels NN est représenté sur la figure 3. Dans cet exemple, le réseau de neurones artificiels NN est un réseau de neurones à convolution, par exemple de type U-Net.

De manière générale, un tel réseau de neurones artificiels NN comprend une pluralité de couches de convolution distribuées selon différents niveaux, tel que cela est expliqué ci-après et représenté sur la figure 3. Plus de détails sur un réseau de neurones de type U-Net peuvent également être trouvés dans l'article « U-Net: Convolutional Networks for Biomedical Image Segmentation » de Ronneberger, O., Fischer, P. & Brox, T., CoRR, abs/1505.04597, 2015.

Afin de décrire l'architecture du réseau de neurones artificiels NN, on considère ici qu'une image $I_e$ est fournie en entrée de ce réseau de neurones artificiels NN. En pratique, cette image $I_e$ est une image dérivée de l'hologramme numérique H, tel que cela sera expliqué par la suite.

Comme le montre la figure 3, le réseau de neurones artificiels NN comprend ici une première partie 10, un pont de liaison 20 et une deuxième partie 30.

La première partie 10 est une partie dite de contraction. De manière générale, cette première partie 10 présente la fonction d'encodeur et permet de réduire la taille de l'image fournie en entrée tout en en conservant les caractéristiques. Pour cela, elle comprend ici quatre niveaux 12, 14, 16, 18. Chaque niveau 12, 14, 16, 18 comprend un bloc de convolution Conv et un bloc de sous-échantillonnage D.

Le bloc de convolution Conv comprend au moins une couche de convolution dont le noyau est une matrice de taille nxn. De préférence ici, chaque bloc de convolution présente deux couches de convolution successives. Ici, chaque couche de convolution présente un noyau avec une matrice de taille 3x3.

Puis, la couche de convolution (ou les couches de convolution s'il y en a plusieurs) est suivie d'une fonction d'activation de type unité linéaire rectifiée (ou ReLu pour « *Rectified Linear Unit* » selon l'appellation d'origine anglosaxonne couramment utilisée). Enfin, le bloc de convolution Conv comprend, pour le résultat obtenu après application de la fonction d'activation, une normalisation dite par lot. Ce lot est ici formé par le nombre d'images fournies en entrée du réseau de neurones artificiels NN. Lors de l'étape d'apprentissage du réseau de neurones artificiels telle que décrite ci-après, la taille du lot est supérieure ou égale à 1 (c'est-à-dire qu'au moins deux images sont fournies en entrée pour permettre l'entraînement du réseau de neurones artificiels). Dans le cas du procédé d'estimation de la carte de profondeur tel que décrit ultérieurement, la taille du lot est, par exemple ici, donnée par le nombre d'images reconstruites $I_i$ (voir ci-après).

Comme cela est représenté sur la figure 3, en sortie du bloc de convolution Conv, chaque niveau 12, 14, 16, 18 comprend le bloc de sous-échantillonnage D. Ce bloc de sous-échantillonnage D permet de réduire les dimensions du résultat obtenu en sortie du bloc de convolution Conv. Il s'agit par exemple ici d'une réduction par 2 de ces dimensions par exemple en sélectionnant la valeur de pixel maximale parmi les quatre pixels d'une fenêtre de pixels de taille 2x2 (on parle alors de « *max-pooling 2x2* » selon l'expression anglosaxonne couramment utilisée).

Ainsi, en prenant l'exemple représenté sur la figure 3, l'image d'entrée $I_e$ est fournie en entrée du premier niveau 12 de la première partie 10. Le bloc de convolution Conv et le bloc de sous-échantillonnage D de ce premier niveau 12 permettent alors d'obtenir, en sortie, une première donnée $X^{0,0}$. Cette première donnée $X^{0,0}$ présente par exemple ici des dimensions réduites de moitié par rapport à l'image d'entrée $I_e$.

Puis, cette première donnée $X^{0,0}$ est fournie en entrée du deuxième niveau 14 de la première partie 10 de manière à obtenir, en sortie de celui-ci, une deuxième donnée $X^{1,0}$. Cette deuxième donnée $X^{1,0}$ présente par exemple ici des dimensions réduites de moitié par rapport à la première donnée $X^{0,0}$.

La deuxième donnée $X^{1,0}$ est ensuite fournie en entrée du troisième niveau 16 de la première partie 10 de manière à obtenir, en sortie de celui-ci, une troisième donnée $X^{2,0}$. Cette troisième donnée $X^{2,0}$ présente par exemple ici des dimensions réduites de moitié par rapport à la deuxième donnée $X^{1,0}$.

Puis, cette troisième donnée $X^{2,0}$ est fournie en entrée du quatrième niveau 18 de la première partie 10 de manière à obtenir, en sortie, une quatrième donnée $X^{3,0}$. Cette quatrième donnée $X^{3,0}$ présente par exemple ici des dimensions réduites de moitié par rapport à la troisième donnée $X^{2,0}$.

Ainsi, les opérations de traitement de l'image d'entrée $I_e$ par la première partie 10 du réseau de neurones artificiels NN peuvent s'exprimer sous la forme suivante :

$$X^{i,j} = D\left(Conv\left(X^{i-1,j}\right)\right)$$

avec j=0 et i compris entre 1 et 4, l'opérateur Conv correspondant au traitement mis en oeuvre par le bloc de convolution Conv et l'opérateur D étant associé au bloc de sous-échantillonnage D.

Comme cela est visible sur la figure 3, le réseau de neurones artificiels NN comprend, en sortie de la première partie 10, le pont de liaison 20. Ce pont de liaison 20 permet de faire le lien entre la première partie 10 et la deuxième partie 30 du réseau de neurones artificiels NN. Il comprend un bloc de convolution Conv tel que décrit précédemment. Ici, il reçoit ainsi en entrée la quatrième donnée $X^{3,0}$ et fournit, en sortie, une cinquième donnée $X^{4,0}$.

La deuxième partie 30 du réseau de neurones artificiels NN est dite d'expansion. De manière générale, cette deuxième partie 30 présente la fonction de décodeur et permet de former une image présentant la taille de l'image fournie en entrée et qui ne contient que les caractéristiques essentielles au traitement.

Pour cela, la deuxième partie 30 comprend ici quatre niveaux 32, 34, 36, 38. Par analogie à la première partie 10, on définit le premier niveau 38 de la deuxième partie 30 comme celui positionné au même niveau que le premier niveau 12 de la première partie 10. Le deuxième niveau 36 de la deuxième partie 30 est positionné au même niveau que le deuxième niveau 14 de la première partie 10 du réseau de neurones artificiels NN. Le troisième niveau 34 de la deuxième partie 30 est positionné au même niveau que le troisième niveau 16 de la première partie 10 du réseau de neurones artificiels NN. Enfin, le quatrième niveau 32 de la deuxième partie 30 est positionné au même niveau que le quatrième niveau 18 de la première partie 10 du réseau de neurones artificiels NN. Cette définition est utilisée afin de mettre en correspondance les niveaux du réseau de neurones artificiels traitant les données de mêmes dimensions.

Chaque niveau 32, 34, 36, 38 comprend un bloc de suréchantillonnage U, un bloc de concaténation Conc et un bloc de convolution Conv (tel que celui introduit précédemment dans la première partie).

Chaque bloc de suréchantillonnage U vise à augmenter les dimensions de la donnée reçue en entrée. Il s'agit d'une opération d'« upscaling » selon l'expression anglosaxonne couramment utilisée. Par exemple ici, les dimensions sont multipliées par 2.

A la suite du bloc de suréchantillonnage U, chaque niveau 32, 34, 36, 38 comprend le bloc de concaténation Conc. Ce dernier vise à concaténer la donnée obtenue en sortie du bloc de suréchantillonnage U du niveau concerné avec la donnée de même taille obtenue en sortie de l'un des niveaux 12, 14, 16, 18 de la première partie 10 du réseau de neurones artificiels NN. L'implication de données issues de la première partie du réseau de neurones artificiels NN dans l'opération de concaténation est représentée en traits discontinus sur la figure 3.

Ce bloc de concaténation permet alors la transmission des informations de hautes fréquences extraites obtenues dans la première partie 10 du réseau de neurones artificiels NN également dans la deuxième partie 30. Sans ce bloc de concaténation Conc, cette information pourrait être perdue suite aux multiples opérations de sous-échantillonnage et suréchantillonnage présentes dans le réseau de neurones artificiels NN.

Puis, en sortie du bloc de concaténation Conc, chaque niveau 32, 34, 36, 38 de la deuxième partie 30 comprend un bloc de convolution Conv tel que celui décrit précédemment dans la première partie 10 du réseau de neurones artificiels NN. Chaque bloc de convolution Conv comprend notamment ici au moins une couche de convolution suivie d'une fonction d'activation de type unité linéaire rectifiée et d'une opération de normalisation par lot.

Ainsi, sur la base de l'exemple représenté sur la figure 3, la cinquième donnée $X^{4,0}$ est fournie en entrée du quatrième niveau 32 de la deuxième partie 30. Le bloc de suréchantillonnage U permet alors d'obtenir, en sortie, une première donnée intermédiaire $X^{int1}$, qui présente les mêmes dimensions que la quatrième donnée $X^{3,0}$ obtenue en sortie du quatrième niveau 18 de la première partie 10. Cette première donnée intermédiaire $X^{int1}$ et la quatrième donnée $X^{3,0}$ sont ensuite concaténées par le bloc de concaténation Conc. Le résultat obtenu en sortie du bloc de concaténation Conc est ensuite fourni en entrée du bloc de convolution Conv de manière à obtenir, en sortie, une sixième donnée $X^{3,1}$.

Cette sixième donnée $X^{3,1}$ est ensuite fournie en entrée du troisième niveau 34 de la deuxième partie 30, et plus particulièrement, en entrée du bloc de suréchantillonnage U. En sortie de ce bloc de suréchantillonnage U, une deuxième donnée intermédiaire $X^{int2}$, de mêmes dimensions que la troisième donnée $X^{2,0}$, est obtenue. La deuxième donnée intermédiaire $X^{int2}$ et la troisième donnée $X^{2,0}$ sont concaténées par le bloc de concaténation Conc. Le résultat obtenu en sortie du bloc de concaténation Conc est fourni en entrée du bloc de convolution Conv de manière à obtenir, en sortie, une septième donnée $X^{2,2}$.

Puis, comme le montre la figure 3, la septième donnée $X^{2,2}$ est fournie en entrée du deuxième niveau 36 de la deuxième partie 30 (et donc en entrée du bloc de suréchantillonnage U de ce deuxième niveau 36). Une troisième donnée intermédiaire $X^{int3}$ est obtenue en sortie de ce bloc de suréchantillonnage U. Cette troisième donnée intermédiaire $X^{int3}$ présente les mêmes dimensions que la deuxième donnée $X^{1,0}$. La troisième donnée intermédiaire $X^{int3}$ et la deuxième donnée $X^{1,°}$ sont ensuite concaténées par le bloc de concaténation Conc. Le résultat obtenu en sortie du bloc de concaténation Conc est fourni en entrée du bloc de convolution Conv de manière à obtenir, en sortie, une huitième donnée $X^{1,3}$.

Puis, cette huitième donnée $X^{1,3}$ est fournie en entrée du premier niveau 38 de la deuxième partie 30. Le bloc de suréchantillonnage U permet alors d'obtenir une quatrième donnée $X^{int4}$. Cette dernière présente les mêmes dimensions que la première donnée $X^{0,0}$. La quatrième donnée intermédiaire $X^{int4}$ et la première donnée $X^{0,0}$ sont ensuite concaténées par le bloc de concaténation Conc. Le résultat obtenu en sortie du bloc de concaténation Conc est fourni en entrée du bloc de convolution Conv de manière à obtenir, en sortie, une donnée finale $X^{0,4}$. Cette donnée finale $X^{0,4}$ présente les mêmes dimensions et la même résolution que l'image d'entrée $I_e$. En pratique ici, cette donnée finale $X^{0,4}$ est par exemple associée à une carte de focalisation telle que décrite ci-après.

Ainsi, les opérations de traitement de la cinquième donnée $X^{4,\circ}$ par la deuxième partie 30 du réseau de neurones artificiels NN peuvent s'exprimer sous la forme suivante :

$$X^{i,j} = Conv\big(Conc\big[X^{i,0}; U\big(X^{i+1,j-1}\big)\big]\big)$$

avec $j \geq 1$ et i compris entre 0 et 3, l'opérateur Conv correspondant au traitement mis en oeuvre par le bloc de convolution Conv, l'opérateur Conc correspondant au traitement mis en oeuvre par le bloc de concaténation Conc et l'opérateur U étant associé au bloc de suréchantillonnage U.

La figure 4 est un logigramme représentant un exemple de procédé d'estimation de la carte de profondeur C associée à l'hologramme numérique H, mis en oeuvre dans le contexte décrit précédemment. Ce procédé est par exemple mis en oeuvre par le processeur 2. De manière générale, ce procédé est mis en oeuvre par ordinateur.

Comme cela est représenté sur la figure 4, le procédé débute à l'étape E2 lors de laquelle le processeur 2 détermine une profondeur minimale $z_{min}$ et une profondeur maximale $z_{max}$ de la coordonnée en z dans la scène tridimensionnelle de l'hologramme numérique H. Ces profondeurs minimale et maximale sont par exemple préalablement enregistrées dans le dispositif de mémorisation 4.

Le procédé se poursuit ensuite par une étape E4 de reconstruction d'une pluralité d'images bidimensionnelles de la scène tridimensionnelle représentée par l'hologramme numérique H.

Pour cela, le module de reconstruction 5 est configuré pour reconstruire n images $I_i$ de la scène au moyen de l'hologramme numérique H, avec i un entier allant de 1 à n.

Chaque image reconstruite $I_i$ est définie dans un plan de reconstruction qui est perpendiculaire à l'axe de profondeur de l'hologramme numérique H. En d'autres termes, chaque plan de reconstruction est perpendiculaire à l'axe de profondeur z. Chaque plan de reconstruction est associé à une valeur de profondeur, permettant d'associer à chaque image reconstruite $I_i$ une profondeur $z_i$, l'indice i se référant à l'indice de l'image reconstruite $I_i$. Chaque valeur de profondeur définit une distance entre le plan de l'hologramme numérique et le plan de reconstruction concerné.

De préférence ici, l'étape E4 de reconstruction est mise en oeuvre de telle sorte que les profondeurs $z_i$ associées aux images reconstruites $I_i$ sont uniformément réparties entre la profondeur minimale $z_{min}$ et la profondeur maximale $z_{max}$. En d'autres termes, les images reconstruites $I_i$ sont uniformément réparties selon l'axe des profondeurs, entre la profondeur minimale $z_{min}$ et la profondeur maximale $z_{max}$. Ainsi, la première image reconstruite $I_1$ est espacée du plan de l'hologramme numérique H par la profondeur minimale $z_{min}$ alors que la dernière image reconstruite $I_n$ est espacée du plan de l'hologramme numérique H par la profondeur maximale $z_{max}$.

Les plans de reconstruction associés aux images reconstruites $I_i$ sont par exemple espacés deux à deux d'une distance $z_e$. La distance $z_e$ entre chaque plan de reconstruction est par exemple de l'ordre de 50 micromètres ($\mu$m).

De préférence, les n images obtenues à l'étape E4 de reconstruction sont calculées en utilisant une propagation du spectre angulaire définie par la formule suivante :

$$I_i(x,y) = F^{-1}\left\{ F(H)e^{j2\pi z_i\sqrt{\lambda^{-2}-f_x^2-f_y^2}}\right\}(x,y)$$

avec F et $F^{-1}$ correspondant à des transformées de Fourier directe et inverse, respectivement, et $f_x$ et $f_y$ sont les coordonnées fréquentielles de l'hologramme numérique H dans le domaine de Fourier selon une première direction spatiale x et une deuxième direction spatiale y de l'hologramme numérique, $\lambda$ la longueur d'onde d'acquisition de l'hologramme numérique H, i l'indice de l'image I reconstruite avec i allant de 1 à n et $z_i$ la profondeur donnée dans le plan de reconstruction de l'image $I_i$.

Chaque image reconstruite $I_i$ est définie par une pluralité de pixels. De préférence, les images reconstruites sont formées d'autant de pixels que l'hologramme numérique H. Ainsi, les images reconstruites $I_i$ et l'hologramme numérique H sont de même taille. Par exemple, dans le cas d'un hologramme numérique H de taille 1024x1024, chaque image reconstruite $I_i$ présente également une taille de 1024x1024.

Comme le montre la figure 4, le procédé se poursuit à l'étape E6. Lors de cette étape, le module de décomposition 6 est configuré pour décomposer chaque image reconstruite $I_i$ obtenue à l'étape E4 en une pluralité d'imagettes $J_{i;j,k}$. En d'autres termes, lors de cette étape E6 de décomposition, chaque image reconstruite $I_i$ est découpée en une pluralité d'imagettes $J_{i;j,k}$. En d'autres termes encore, chaque imagette $J_{i;j,k}$ correspond à une sous-partie de l'image reconstruite $I_i$ concernée.

Chaque imagette $J_{i;j,k}$ est définie par la formule suivante :

$$J_{i;j,k} = \{|I_i|(j.s : (j+1).s, k.s : (k+1).s)\}$$

avec $j = 1 \ldots \left\lfloor \frac{s_W}{s} \right\rfloor$ et $k = 1 \ldots \left\lfloor \frac{s_H}{s} \right\rfloor$, avec sw et $s_H$ les dimensions (respectivement hauteur et largeur) de l'image reconstruite $I_i$, s la taille de l'imagette $J_{i;j,k}$, $|x_1|$ la notation correspondant au module de la donnée $x_1$ et $\lfloor x_2 \rfloor$, la notation correspondant à la partie entière inférieure du nombre $x_2$. La notation $y_1 : y_2$ signifie que, pour la variable concernée, l'imagette $J_{i;j,k}$ est définie entre le pixel $y_1$ et le pixel $y_2$. En d'autres termes ici, la formule précédente définit l'imagette $J_{i;j,k}$, selon la dimension x, entre les pixels js et (j+1)s de l'image reconstruite $I_i$ et, selon la dimension y, entre les pixels ks et (k+1)s de l'image reconstruite $I_i$.

Chaque imagette $J_{i;j,k}$ comprend une pluralité de pixels. Cette pluralité de pixels correspond à une partie des pixels de l'image reconstruite $I_i$ associée.

Ici, les imagettes $J_{i;j,k}$ sont adjacentes les unes aux autres. En pratique, chaque imagette $J_{i;j,k}$ est formée d'un ensemble de pixels contigus de l'image reconstruite $I_i$. Ici, les ensembles de pixels de l'image reconstruite $I_i$ (formant respectivement chacune des imagettes $J_{i;j,k}$) sont disjoints. En d'autres termes, cela signifie que les imagettes $J_{i;j,k}$ associées à une image reconstruite $I_i$ ne se superposent pas entre elles. Chaque imagette $J_{i;j,k}$ comprend donc des pixels qui n'appartiennent pas aux autres imagettes associées à la même image reconstruite $I_i$. En d'autres termes, les imagettes $J_{i;j,k}$ associées à une image reconstruite $I_i$ sont indépendantes les unes des autres.

Cette propriété d'indépendance entre les imagettes est particulièrement avantageuse pour le procédé selon l'invention car elle en permet une mise en oeuvre plus rapide. De plus, les ressources en calcul nécessaires sont moins coûteuses grâce au nombre limité de zones à analyser (à savoir les différentes imagettes).

Comme chaque imagette $J_{i;j,k}$ est issue d'une image reconstruite $I_i$ associée à une profondeur $z_i$, chaque imagette $J_{i;j,k}$ est également associée à cette même profondeur $z_i$ (de la scène tridimensionnelle).

Dans le cas où l'hologramme numérique H présente une taille de 1024x1024, chaque imagette $J_{i;j,k}$ peut par exemple présenter une taille de 32x32.

Dans le cas où l'hologramme numérique H présente une taille de $I_H \times I_W$, chaque imagette $J_{i;j,k}$ présente une taille de $(32 \times s_H) \times (32 \times s_W)$ avec $s_H = I_H/1024$ et sw=lw/1024.

Cette définition de la taille des imagettes permet d'assurer une taille de ces imagettes adaptées à la taille de l'hologramme numérique H de manière à permettre d'améliorer la vitesse d'implémentation du procédé d'estimation de la carte de profondeur associée à l'hologramme numérique H.

Comme cela est représenté sur la figure 4, le procédé se poursuit ensuite à l'étape E8. Lors de cette étape, le processeur 2 détermine, pour chaque imagette $J_{i;j,k}$, une carte de focalisation $C_{i;j,k}$. Cette carte de focalisation $C_{i;j,k}$ comprend une pluralité d'éléments (chacun repéré par les indices js+q, ks+r). Chaque élément de la carte de focalisation $C_{i;j,k}$ est associé à un pixel de l'imagette $J_{i;j,k}$ concernée.

Ici, chaque élément de la carte de focalisation $C_{i;j,k}$ correspond à un niveau de focalisation (correspondant à un niveau de mise au point associé au pixel concerné dans l'imagette $J_{i;j,k}$). En d'autres termes, la carte de focalisation $C_{i;j,k}$ associe à chaque pixel de l'imagette $J_{i;j,k}$ concernée un niveau de focalisation.

En pratique, cette étape E8 est mise en oeuvre par l'intermédiaire du réseau de neurones artificiels NN. Ce dernier reçoit, en entrée, chacune des imagettes $J_{i;j,k}$ et fournit en sortie les niveaux de focalisation associés à chacun des pixels de l'imagette $J_{i;j,k}$ concernée.

Plus particulièrement, le réseau de neurones artificiels NN reçoit, en entrée, chacun des pixels de l'imagette $J_{i;j,k}$ et fournit, en sortie, le niveau de focalisation associé. Ce niveau de focalisation est par exemple compris entre 0 et 1 et s'assimile à un niveau de netteté associé au pixel concerné. Par exemple, dans le cas d'un pixel flou, le niveau de focalisation est proche de 0 tandis que dans le cas d'un pixel sensiblement net, le niveau de focalisation est proche de 1.

De manière avantageuse, l'utilisation du réseau de neurones artificiels permet un traitement plus rapide de l'ensemble des imagettes et une détermination plus précise des niveaux de focalisation associés aux pixels des imagettes.

Préalablement à la mise en oeuvre du procédé d'estimation, une étape d'apprentissage (non représentée sur les figures) permet l'entraînement du réseau de neurones artificiels NN. Pour cela, des hologrammes calculés par ordinateur sont par exemple utilisés. Pour ces hologrammes calculés, la géométrie exacte de la scène (et donc la carte de profondeur associée) est connue. Un ensemble d'images de base est issu de ces hologrammes calculés.

Pour chaque image de base de cet ensemble, chaque pixel est associé à un niveau de focalisation. En effet, pour chaque pixel de chaque image de base, le niveau de focalisation est égal à 1 si le pixel correspondant, dans la carte de profondeur, est égal à la profondeur associée. Si ce n'est pas le cas, le niveau de focalisation vaut 0.

L'étape d'apprentissage consiste alors à ajuster des poids de noeuds des différentes couches de convolution comprises dans les différents blocs de convolution Conv décrits précédemment de manière à minimiser l'erreur entre les niveaux de focalisation obtenus en sortie du réseau de neurones artificiels NN (lorsque que les images de base sont fournies en entrée de ce réseau) et ceux déterminés à partir de la carte de profondeur connue. Par exemple, une méthode de perte d'entropie croisée peut être utilisée ici de manière à minimiser la distance entre les niveaux de focalisation obtenus en sortie du réseau de neurones artificiels NN (lorsque que les images de base sont fournies en entrée de ce réseau) et ceux déterminés à partir de la carte de profondeur connue.

En d'autres termes, les poids des noeuds des différentes couches de convolution sont ajustés de manière à faire converger les niveaux de focalisation obtenus en sortie du réseau de neurones artificiels NN vers les niveaux de focalisation déterminés à partir de la carte de profondeur connue.

En pratique, le réseau de neurones artificiels NN reçoit en entrée l'ensemble des imagettes $J_{i;j,k}$ associées à chaque image reconstruite $I_i$ et procède à un traitement en parallèle de chacune des imagettes $J_{i;j,k}$.

En variante, les imagettes $J_{i;j,k}$ pourraient être traitées successivement, les unes après les autres.

A l'issue de l'étape E8, le processeur 2 connaît donc, pour chaque imagette $J_{i;j,k}$, la carte de focalisation $C_{i;j,k}$ associée qui répertorie les niveaux de focalisation obtenus en sortie du réseau de neurones artificiels NN associés à chaque pixel de l'imagette $J_{i;j,k}$ concernée. Chaque carte de focalisation $C_{i;j,k}$ est associée à l'imagette correspondant $J_{i;j,k}$, donc à la profondeur $z_i$ (de la scène tridimensionnelle).

Comme le montre la figure 4, le procédé comprend ensuite une étape E10 d'estimation de la carte de profondeur C associée à l'hologramme numérique H. Cette carte de profondeur C comprend une pluralité de valeurs de profondeur $d_{js+q,ks+r}$. Chaque valeur de profondeur $d_{js+q,ks+r}$ est associée à un pixel parmi les différents pixels des imagettes $J_{i;j,k}$. La valeur de profondeur $d_{js,q,ks+r}$ est déterminée sur la base des niveaux de focalisation déterminés à l'étape E8.

En effet, lors de l'étape E8, étant donnée la pluralité d'images reconstruites $I_i$ correspondant chacune à une profondeur $z_i$ différente, un pixel d'une imagette est associé à différents niveaux de focalisation (en fonction de la profondeur de l'image reconstruite $I_i$ de laquelle est dérivée l'imagette concernée). En d'autres termes, pour chaque pixel (associé à une valeur de profondeur $d_{js+q,ks+r}$ de la carte de profondeur C), plusieurs niveaux de focalisation sont connus.

Ainsi, ici, le processeur 2 détermine, pour chaque pixel associé à la valeur de profondeur $d_{js+q,ks+r}$ concernée, la profondeur pour laquelle le niveau de focalisation est le plus élevé :

$$d_{js+q,ks+r} = argmax_{i=1...N}\left(C_{i;j,k}(q,r)\right)$$

avec (js+q,ks+r) le pixel auquel est attribuée la valeur de profondeur déterminée, NN l'opérateur correspondant à la mise en oeuvre du réseau de neurones artificiels NN et argmax, l'opérateur traduisant la détermination de la valeur maximale du niveau de focalisation (obtenu en sortie du réseau de neurones artificiels).

En d'autres termes, pour chaque pixel d'indices (js+q, ks+r), le processeur 2 détermine la profondeur à laquelle le niveau de focalisation est le plus élevé. Cette profondeur correspond alors à la valeur de profondeur $d_{js+q,ks+r}$ (élément de la carte de profondeur C).

En variante, la valeur de profondeur pourrait être déterminée en utilisant une autre méthode que la détermination de la valeur maximale du niveau de focalisation. Par exemple, une zone formée d'une pluralité de pixels adjacents peut être définie et la valeur de profondeur peut être déterminée en considérant la profondeur pour laquelle un écart maximal est observé par rapport à la moyenne des niveaux de focalisation sur la zone de pixels définie.

A l'issue de l'étape E10, la carte de profondeur C est donc par exemple ici estimée à partir de ces valeurs de profondeur déterminées. Ainsi, chaque élément de la carte de profondeur C comprend une valeur de profondeur $d_{js+q,ks+r}$ associée à chaque pixel d'indices (js+q, ks+r).

Cette carte de profondeur C estimée permet finalement de disposer d'informations spatiales sous la forme d'une matrice de valeurs de profondeur représentant la scène tridimensionnelle associée à l'hologramme numérique H.

Bien entendu, le procédé décrit précédemment pour un hologramme numérique s'applique de la même façon pour une pluralité d'hologrammes. Pour une pluralité d'hologrammes numériques, la mise en oeuvre du procédé peut être successive pour chaque hologramme ou en parallèle pour la pluralité d'hologrammes numériques.

**Revendications**

1. Procédé d'estimation d'une carte de profondeur (C) associée à un hologramme numérique (H) représentant une scène, le procédé comprenant des étapes de :

   - reconstruction (E4) d'une pluralité d'images ($I_i$) de la scène à partir de l'hologramme numérique (H), chaque image reconstruite ($I_i$) étant associée à une profondeur ($z_i$) de la scène,
   - décomposition (E6) de chaque image reconstruite ($I_i$) en une pluralité d'imagettes ($J_{i;j,k}$), lesdites imagettes ($J_{i;j,k}$) de ladite pluralité étant adjacentes les unes aux autres, chaque imagette ($J_{i;j,k}$) étant associée à la profondeur ($z_i$) de la scène correspondant à l'image reconstruite ($I_i$) concernée, chaque imagette ($J_{i;j,k}$) comprenant une pluralité de pixels,
   - détermination (E8), pour chaque imagette ($J_{i;j,k}$), d'une carte de focalisation ($C_{i;j,k}$) par fourniture, en entrée d'un réseau de neurones artificiels (NN), des valeurs associées auxdits pixels de l'imagette ($J_{i;j,k}$) concernée, de manière à obtenir, en sortie du réseau de neurones artificiels (NN), ladite carte de focalisation ($C_{i;j,k}$) comprenant un niveau de focalisation associé au pixel concerné, et
   - détermination (E10) d'une valeur de profondeur ($d_{js+q,ks+r}$), pour chaque point d'une carte de profondeur (C), en fonction des niveaux de focalisation obtenus respectivement pour les pixels associés audit point de la carte de profondeur (C) dans les cartes de focalisation ($C_{i;j,k}$) respectivement déterminées pour les imagettes ($J_{i;j,k}$) contenant un pixel correspondant audit point de la carte de profondeur (C).

2. Procédé selon la revendication 1, dans lequel, pour chaque point de la carte de profondeur (C), la valeur de profondeur ($d_{js+q,ks+r}$) associée est obtenue par détermination de la profondeur correspondant au niveau de focalisation le plus élevé parmi tous les pixels associés audit point de la carte de profondeur (C) dans les imagettes ($J_{i;j,k}$) contenant lesdits pixels.

3. Procédé selon la revendication 1 ou 2, dans lequel le réseau de neurones artificiels (NN) est un réseau de neurones à convolution.

4. Procédé selon l'une quelconque des revendications 1 à 3, dans lequel l'étape de reconstruction (E4) est mise en oeuvre de telle sorte que les images reconstruites ($I_i$) sont respectivement associées à des profondeurs uniformément réparties entre une profondeur minimale ($z_{min}$) et une profondeur maximale ($z_{max}$) de la scène.

5. Dispositif (1) d'estimation d'une carte de profondeur (C) associée à un hologramme numérique (H) représentant une scène, le dispositif (1) comprenant :

   - un module de reconstruction (5) d'une pluralité d'images ($I_i$) de la scène à partir de l'hologramme numérique (H), chaque image reconstruite ($I_i$) étant associée à une profondeur ($z_i$) de la scène,
   - un module de décomposition (6) de chaque image reconstruite ($I_i$) en une pluralité d'imagettes ($J_{i;j,k}$), lesdites imagettes ($J_{i;j,k}$) de ladite pluralité étant adjacentes les unes aux autres, chaque imagette ($J_{i;j,k}$) étant associée à la profondeur ($z_i$) de la scène correspondant à l'image reconstruite ($I_i$) concernée, chaque imagette ($J_{i;j,k}$) comprenant une pluralité de pixels,
   - un module de détermination (8), pour chaque imagette ($J_{i;j,k}$), d'une carte de focalisation ($C_{i;j,k}$) par fourniture, en entrée d'un réseau de neurones artificiels (NN), des valeurs associées auxdits pixels de l'imagette ($J_{i;j,k}$) concernée, de manière à obtenir, en sortie du réseau de neurones artificiels (NN), ladite carte de focalisation ($J_{i;j,k}$) comprenant un niveau de focalisation associé au pixel concerné, et
   - un module de détermination (9) d'une valeur de profondeur ($d_{js+q,ks+r}$), pour chaque point d'une carte de profondeur (C) en fonction des niveaux de focalisation obtenus respectivement pour les pixels associés audit point de la carte de profondeur (C) dans les imagettes ($J_{i;j,k}$) contenant lesdits pixels.

6. Programme d'ordinateur comprenant des instructions exécutables par un processeur (2) et conçues pour mettre en oeuvre un procédé selon l'une des revendications 1 à 4 lorsque ces instructions sont exécutées par le processeur (2).

**Fig.1**

**Fig.2**

**Fig.4**

Det $z_{min}, z_{max}$ — E2

Rec $I_i$ — E4

Dec $J_{i;j,k}$ — E6

Det $C_{i;j,k}$ — E8

Det C — E10

# Fig.3

**EP 4 365 683 A1**

Europäisches
Patentamt

European
Patent Office

Office européen
des brevets

## RAPPORT DE RECHERCHE EUROPEENNE

Numéro de la demande

**EP 23 20 7459**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/084616 A1 (BIOMERIEUX SA [FR]; BIOASTER [FR]) 28 avril 2022 (2022-04-28) * page 5, ligne 1 – page 6, ligne 15 * ----- | 1-6 | INV. G03H1/08 G06N3/02 G06N3/0464 G06T7/55 G06N3/08 ADD. G06V10/44 G06V10/77 G06V20/64 |

DOMAINES TECHNIQUES
RECHERCHES (IPC)

G03H

Le présent rapport a été établi pour toutes les revendications

| Lieu de la recherche | Date d'achèvement de la recherche | Examinateur |
|---|---|---|
| Munich | 7 février 2024 | Sittler, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 7459

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2024

| Document brevet cité au rapport de recherche | Date de publication | Membre(s) de la famille de brevet(s) | Date de publication |
|---|---|---|---|
| WO 2022084616 A1 | 28-04-2022 | CN 116888644 A | 13-10-2023 |
| | | EP 4232946 A1 | 30-08-2023 |
| | | JP 2023546193 A | 01-11-2023 |
| | | US 2023386233 A1 | 30-11-2023 |
| | | WO 2022084616 A1 | 28-04-2022 |

EPO FORM P0460

Pour tout renseignement concernant cette annexe : voir Journal Officiel de l'Office européen des brevets, No.12/82

**EP 4 365 683 A1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GROSSMANN, PAVEL.** *Pattern Recognit. Lett,* 1987, vol. 5, 63-69

- **RONNEBERGER, O. ; FISCHER, P ; BROX, T.** U-Net: Convolutional Networks for Biomedical Image Segmentation. *CoRR,* 2015